(19) **Europäisches Patentamt**

**European Patent Office**

**Office européen des brevets**

(11) **EP 0 731 573 B1**

(12) **FASCICULE DE BREVET EUROPEEN**

(45) Date de publication et mention
de la délivrance du brevet:
**04.09.2002 Bulletin 2002/36**

(51) Int Cl.⁷: **H04B 17/00**, H04L 1/12

(21) Numéro de dépôt: **96200583.1**

(22) Date de dépôt: **05.03.1996**

(54) **Procédé et dispositif pour tester un canal de transmission dans un système de communication**

Verfahren und Vorrichtung zur Überprufung eines Übertragungskanals in einem
Kommunikationssystem

Method and apparatus for testing a transmission channel in a communications system

(84) Etats contractants désignés:
**BE DE FR GB**

(30) Priorité: **08.03.1995 FR 9502712**

(43) Date de publication de la demande:
**11.09.1996 Bulletin 1996/37**

(73) Titulaire: **Koninklijke Philips Electronics N.V.
5621 BA Eindhoven (NL)**

(72) Inventeurs:
• **Giorgi, Sabine, Société Civile S.P.I.D.
F-75008 Paris (FR)**
• **Chouly, Antoine, Société Civile S.P.I.D.
F-75008 Paris (FR)**
• **Ballarin, Bruno, Société Civile S.P.I.D.
F-75008 Paris (FR)**

(74) Mandataire: **Landousy, Christian et al
Société Civile S.P.I.D.
156, Boulevard Haussmann
75008 Paris (FR)**

(56) Documents cités:
**EP-A- 0 114 463 EP-A- 0 397 535
US-A- 5 297 186**

**Description**

L'invention concerne un procédé et un système de communication comprenant des moyens d'émission et des moyens de réception communiquant à travers un canal de transmission, les moyens d'émission émettant, sur le canal, une séquence de test comportant une pluralité de fréquences de test, les moyens de réception comportant des moyens de test pour tester une qualité du canal en calculant une fonction de transfert du canal et pour sélectionner au moins une bande de fréquences pour la transmission.

Plus particulièrement elle concerne un système de communication qui met en relation une station appelante avec une station appelée à travers un canal de transmission.

La transmission entre deux stations peut être soumise à toutes sortes de perturbations qui peuvent nuire à la qualité de la transmission. Dans la pratique, il est donc nécessaire d'effectuer au préalable une procédure de test du canal afin de déterminer les conditions optimales de transmission. Cette procédure consiste par exemple à mettre sur le canal des signaux à fréquences déterminées et à examiner, à l'autre extrémité du canal, les perturbations qui ont été apportées lors de la transmission. Une telle procédure existe par exemple dans le cas de communication sur lignes téléphoniques.

Un procédé et un analyseur pour tester la qualité des canaux de transmission sont par exemple décrits dans le document US 4.633.411 qui concerne des systèmes de communication haute-fréquence. Le canal est testé en émettant, à l'aide d'un générateur, en début de communication, un certain nombre de signaux à fréquences connues, et en examinant, à l'aide d'un processeur de traitement, la qualité des signaux reçus en sortie de canal. Les signaux subissent une transformée de Fourier pour transformer les signaux du domaine temporel dans le domaine fréquentiel afin d'estimer la puissance spectrale des signaux reçus. Par ailleurs, une puissance de bruit est déterminée durant des périodes de silence durant lesquelles il n'y a pas de transmission des signaux à fréquences connues. En calculant un rapport puissance spectrale sur puissance de bruit, il est ainsi possible de déterminer la bande de transmission la plus favorable pour effectuer la transmission.

Or, il peut apparaître des conditions de communication qui ne permettent pas d'utiliser une telle procédure, en particulier avec des transmissions bidirectionnelles pour lesquelles des phénomènes d'échos rendent impossibles les mesures de bruit au cours de ces périodes de silence, même dans le cas où ces périodes sont prévues. Cette procédure devient inutilisable dans le cas où des périodes de silence ne sont pas prévues.

Le document EP-A-0 397 535 décrit un système du genre mentionné dans le paragraphe introductif muni de moyens pour calculer, pour différents débits binaires, sur la pluralité de fréquences, une puissance de bruit de canal dans des bandes de fréquences.

Un but de l'invention est de permettre de tester la qualité d'un canal de transmission, même en présence d'échos en s'affranchissant des périodes de silence. Un but particulier est de permettre de tester une ligne de transmission opérant selon un mode de fonctionnement bidirectionnel.

Ce but est atteint avec un système de transmission tel que celui décrit dans le document EP-A-0 397 535 muni de moyens de test supplémentaires comprenant:

- des moyens pour calculer, pour chaque bande, un rapport entre une puissance du signal de la séquence et une puissance de bruit incluant la puissance de bruit de canal et une variance, préalablement estimée, des bruits dus aux moyens de réception,
- des moyens pour comparer, pour chaque bande, le rapport avec un rapport maximal théorique propre à chaque bande,
- des moyens pour sélectionner les bandes et les débits pour lesquels les rapports sont inférieurs aux rapports maximaux théoriques respectifs et pour transmettre la sélection aux moyens d'émission.

L'invention concerne également un procédé pour tester un canal de transmission par émission, sur le canal, par des moyens d'émission, d'une séquence de test comportant une pluralité de fréquences de test et pour sélectionner, à la réception, au moins une bande de fréquences apte à la transmission, le procédé comprenant les étapes suivantes effectuées par des moyens de réception:

- échantillonner la séquence reçue,
- effectuer, pour différentes bandes de fréquences, pour différents débits binaires, au moins une transformée de Fourier pour calculer, sur la pluralité de fréquences, la fonction de transfert du canal et pour en déduire une puissance de signal dans la bande et une puissance de bruit de canal dans la bande,
- calculer un rapport entre la puissance de signal et une puissance de bruit incluant la puissance de bruit de canal et une variance, préalablement estimée, des bruits dus aux moyens de réception,
- comparer, pour chaque bande, le rapport avec un rapport maximal théorique propre à chaque bande,
- sélectionner les bandes et les débits pour lesquels les rapports sont inférieurs aux rapports maximaux théoriques respectifs,
- transmettre la sélection aux moyens d'émission.

Ainsi, de cette façon, il est possible de tester le canal même en l'absence de moments de silence dans l'émission des séquences. De plus, avantageusement, en mesurant la puissance du bruit de canal et en tenant compte de la variance du bruit créé par la station appelée, il est possible d'obtenir des rapports puissance spectrale/puissance de bruit total qui soient pratiquement les mêmes que les rapports maximaux théoriques (correspondant à des conditions idéales de transmission c'est-à-dire pour une ligne plate parfaite). De ce fait, avec des canaux réels, le procédé de test et le système qui le met en oeuvre fournissent des résultats de test de bien meilleure qualité que la technique connue.

Ceci permet à la station appelée de déterminer les bandes de fréquences et les débits qui sont corrects pour la transmission. A l'issu des tests, la station appelée transmet ces informations à la station appelante pour établir la communication.

Pour définir les bruits dus à la station appelée, le procédé met en oeuvre une étape préliminaire pour estimer la variance des bruits dus aux moyens de réception, étape effectuée en comparant le rapport signal/bruit en sortie des moyens de réception avec le rapport signal/bruit mesuré en sortie de canal pour au moins un canal de caractéristiques connues. Il est néanmoins possible d'estimer la variance des bruits dus aux moyens de réception par d'autres moyens.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1: un diagramme montrant la répartion des fréquences émises dans une séquence ainsi que les différentes bandes de fréquences autorisées.
Figure 2: un exemple, dans le domaine temporel, de l'allure du signal de la séquence reçue par les moyens de réception.
Figure 3: un exemple de fonction de transfert d'un canal.
Figure 4: un schéma d'un système de communication muni de moyens pour tester le canal.
Figure 5: une modélisation de la fonction de transfert du canal, de la fonction de transfert des moyens de réception et du bruit additif.
Figure 6: un organigramme des différentes étapes du procédé de test.
Figure 7: des courbes montrant des variations théoriques de probabilités d'erreurs en fonction du rapport signal/bruit pour différentes modulations dans le cas d'un débit de transmission binaire de 26,4 kbits/s.

A titre d'exemple, considérons le cas de transmissions effectuées avec un modem appliquant la procédure de test V.34 définie par une recommandation du CCITT pour les réseaux téléphoniques. Bien évidemment, l'invention concerne aussi d'autres applications utilisant d'autres séquences de test comportant plusieurs tons dont l'objet est de tester des canaux de transmission.

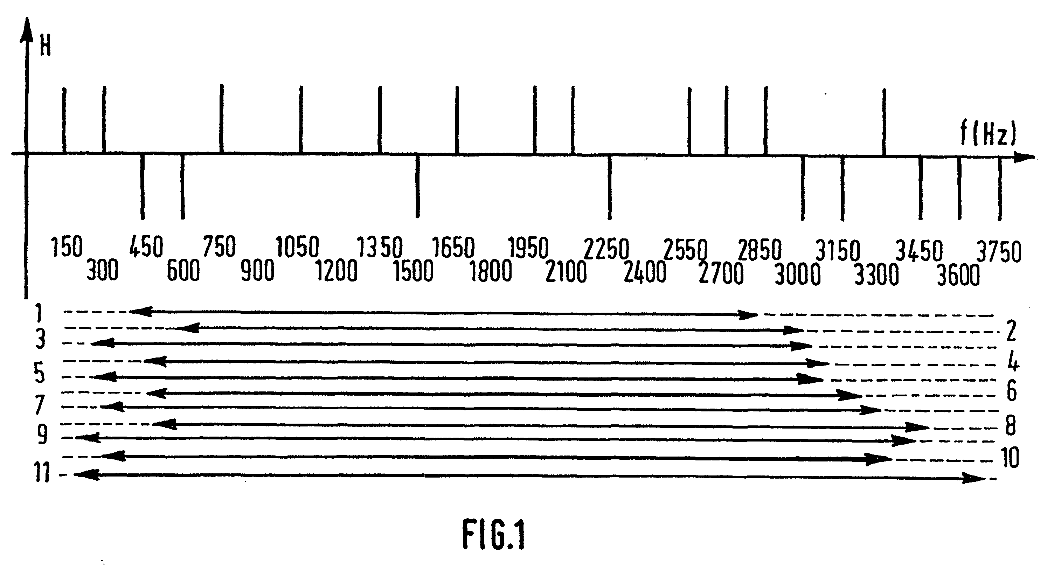

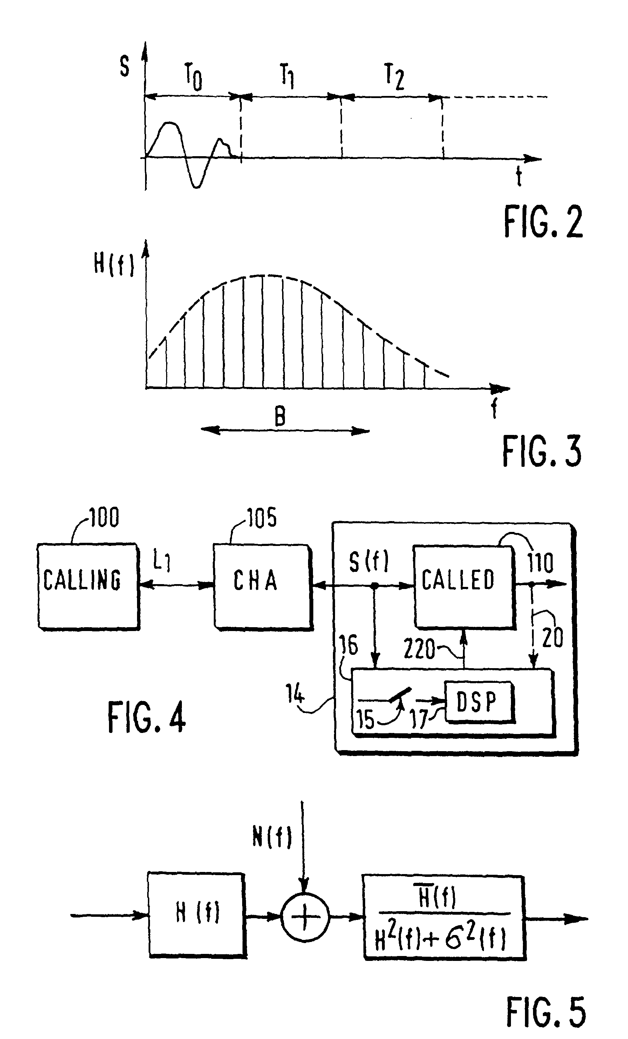

Au début de la transmission (figure 4), un modem appelant 100 émet sur un canal 105, vers un modem appelé 110, respectivement deux séquences de test $L_1$ et $L_2$ qui sont utilisées pour déterminer les caractéristiques du canal et pour sélectionner le mode de modulation à utiliser. Le séquence $L_2$ est identique à la séquence $L_1$ sauf en ce qu'elle est émise à 6 dB au dessus du niveau de puissance nominale. Préférentiellement on utilise la séquence $L_1$. Elle est formée d'un jeu périodique de tons (cosinus) espacés de 150 Hz les uns des autres à des fréquences allant de 150 Hz à 3750 Hz. Les tons à 900 Hz, 1200 Hz, 1800 Hz et 2400 Hz sont omis car ils constituent des tons particuliers pour les communications entre modems. La figure 1 indique l'ensemble des tons utilisés qui sont définis par:

$$f_i = 150 \times i \text{ (Hz)}$$

avec $1 \leq i \leq 25$,
et avec $i \neq 6$, $i \neq 8$, $i \neq 12$, $i \neq 16$.

Les signaux générés pour chaque ton présentent une phase initiale égale à 180° pour les tons à 450 Hz, 600 Hz, 1500 Hz, 2250 Hz, 3000 Hz, 3150 Hz, 3450 Hz, 3600 Hz, 3750 Hz. La phase initiale est nulle pour les autres tons.

Les tons sont organisés en 10 bandes différentes de fréquences, numérotées de 1 à 11, qui peuvent être sélectionnées en fonction des conditions de bruit sur le canal. Dans cet exemple, le canal est une ligne téléphonique.

L'émission de la séquence $L_1$ est destinée à déterminer la qualité du canal pour différentes bandes à différents débits binaires. Dans le cas de l'exemple considéré ici les débits binaires autorisés sont des multiples de 2400 bits/s et vont de 2400 bits/s à 28,8 bits/s. Les largeurs de bandes sont définies d'après le tableau I:

TABLEAU I

| numéro de bande | largeur de bande | fréquence centrale | fréquence initiale | fréquence finale |
|---|---|---|---|---|
| 1 | 2400 | 1600 | 400 | 2800 |
| 2 | 2400 | 1800 | 600 | 3000 |
| 3 | 2743 | 1646 | 274 | 3017 |
| 4 | 2743 | 1829 | 457 | 3200 |
| 5 | 2800 | 1680 | 280 | 3080 |
| 6 | 2800 | 1867 | 467 | 3267 |
| 7 | 3000 | 1800 | 300 | 3300 |
| 8 | 3000 | 2000 | 500 | 3500 |
| 9 | 3200 | 1829 | 229 | 3429 |
| 10 | 3200 | 1920 | 320 | 3520 |
| 11 | 3429 | 1959 | 244 | 3673 |

L'invention propose de sélectionner la bande de fréquences la plus favorable à la transmission et le débit binaire compte tenu des caractéristiques du canal au moment du test et des caractéristiques des moyens de réception.

En considérant la fréquence $f_i$, i étant un indice courant, la séquence de test $L_1(f_i)$, émise par la station appelante, est reçue par la station appelée selon une séquence $S(f_i)$ telle que:

$$(1) \qquad S(f_i) = H(f_i) x L_1(f_i),$$

où $H(f_i)$ est la fonction de transfert du canal. A partir de la séquence reçue $S(f_i)$ il est possible de déterminer $H(f_i)$. La séquence reçue étant dans le domaine temporel il faut la soumettre à l'action d'une transformée de Fourier pour déterminer globalement la fonction de transfert du canal.

La figure 2 fournit un exemple de la forme de la séquence $S(f_i)$ reçue de manière périodique en fonction du temps, selon une suite de périodes T0, T1,... Pour chaque période, la séquence est échantillonnée et soumise à une transformée de Fourier qui délivre une fonction de transfert du canal $H(f_i)$. On effectue une suite de transformées de Fourier sur plusieurs périodes du signal. On obtient par exemple les mesures suivantes en effectuant 64 transformées de Fourier:

$$H_0(150) \qquad\qquad H_1(150)\ldots\ldots\ldots H_{63}(150)$$
$$H_0(300) \qquad\qquad H_1(300)\ldots\ldots\ldots H_{63}(300)$$
$$\ldots\ldots\ldots\ldots\ldots\ldots\ldots\ldots\ldots\ldots\ldots\ldots\ldots\ldots\ldots$$
$$H_0(3750) \qquad\qquad H_1(3750) \qquad\qquad H_{63}(3750)$$
$$\langle\text{-------}\rangle \qquad\qquad \langle\text{-------}\rangle\ldots\ldots\langle\text{-------}\rangle$$
$$T_0 \qquad\qquad\qquad T_1 \qquad\qquad\qquad T_{63}$$

TABLEAU II

Chaque composante du tableau II comporte une composante de bruit. On peut par exemple écrire:

$$H_0(150\ Hz)[\text{mesuré}] = H_0(150\ Hz)[\text{canal}] + N_0(150\ Hz)[\text{bruit}].$$

Pour chaque fréquence (une ligne du tableau II), on calcule une valeur moyenne de la fonction de transfert du canal pour la fréquence considérée tel que:

$$(2) \qquad H_{moy}(f) = 1/N \sum_{j=0}^{N-1} H_j(f_i),$$

où i est la fréquence considérée et j est l'indice de la période concernée. Dans l'exemple choisi, on a N=64.

De même, on calcule la variance du bruit par:

$$(3) \qquad \sigma^2_{moy}(f_i) = 1/N \sum_j H_j^2(f_i) - (H_{moy}^2(f_i))$$

Les résultats $H_{moy}(f_i)$ et $\sigma^2_{moy}(f_i)$ permettent de définir les caractéristiques du canal préalablement à l'établissement de la communication. Dans la suite du texte, $H_{moy}(f_i)$ sera simplifiée en $H(f_i)$ et l'écriture de $\sigma^2_{moy}(f_i)$ sera simplifiée en $\sigma^2(f_i)$.

La figure 5 indique un modèle théorique incorporant le canal, le bruit superposé et la station appelée. Dans ce modèle, la fonction de transfert de la station appelée est égale à :

$$(4) \qquad \frac{\bar{H}(f_i)}{H^2(fi) + \sigma^2(fi)}$$

où $\bar{H}(f_i)$ est la fonction de transfert conjuguée de la fonction de transfert $H(f_i)$. De ce modèle on peut déduire une approximation de la puissance de signal $P_S(f_i)$ en sortie de la station appelée tel que:

$$(5) \qquad P_S(f_i) = \frac{H^2(f_i)}{H^2(f_i) + 2\sigma^2(f_i)}$$

Dans cette équation des termes considérés comme négligeables pour des conditions normales de réception ont été omis.

De la même manière, on déduit une approximation de la puissance de bruit en sortie de la station appelée par:

$$(6) \qquad P_N(f_i) = \frac{\sigma^2(f_i)}{H^2(f_i) + 2\sigma^2(f_i)}$$

En réalité, la station appelée est elle-même génératrice d'un bruit $\sigma_r^2$ qu'il faut prendre en considération pour l'estimation des performances du système. La puissance de signal devient alors :

$$(7) \qquad P_S(f_i) = \frac{H^2(f_i)}{H^2(f_i) + 2\sigma^2(f_i) + \sigma_r^2}$$

et la puissance de bruit devient :

$$(8) \qquad P_N(f_i) = \frac{\sigma^2(f_i)}{H^2(f_i) + 2\sigma^2(f_i) + \sigma_r^2}$$

Le bruit $\sigma_r^2$ généré par la station appelée est estimé préalablement par des mesures préliminaires effectuées avec des canaux connus. Ce bruit $\sigma_r^2$ est une caractéristique intrinsèque de la station appelée, caractéristique qui reste stable par la suite, durant les étapes de test du canal et en cours d'exploitation.

En effectuant ces différentes mesures et en effectuant les calculs ci-dessus, les moyens de test peuvent estimer le rapport signal/bruit prévisible en sortie de la station appelée et sélectionner en conséquence la bande de fréquences et le débit les mieux appropriés à la transmission.

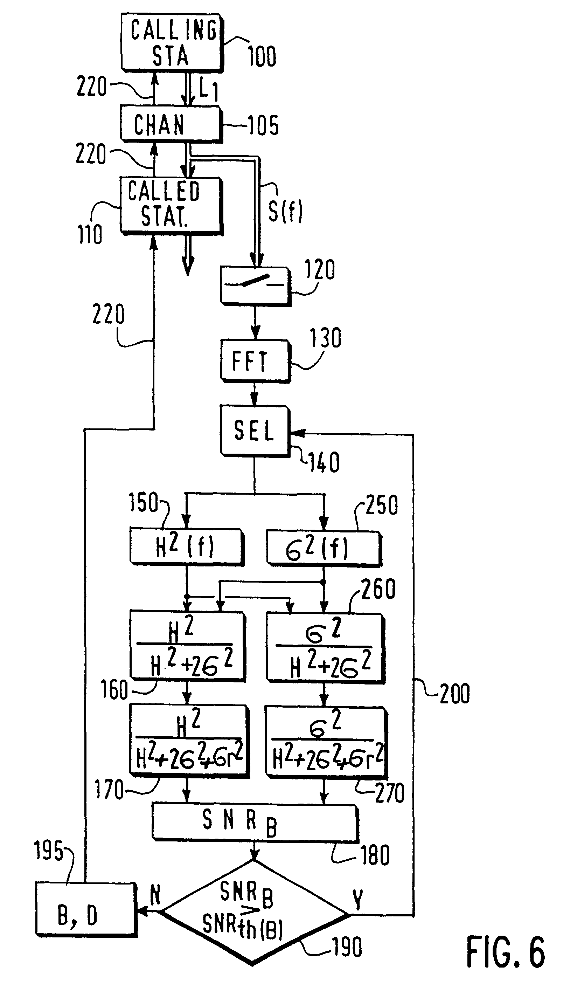

La figure 6 montre un organigramme des opérations mises en oeuvre dans le procédé. La station appelante [bloc 100] émet la séquence $L_1$ sur le canal [bloc 105]. La station apppelée [bloc 110] reçoit une séquence $S(f_i)$ en

sortie de canal. Celle-ci est échantillonnée [bloc 120] puis au cours de chaque période constituant la séquence, une transformée de Fourier [bloc 130] est effectuée pour délivrer la fonction de transfert mesurée du canal. Le procédé sélectionne successivement [bloc 140] chaque bande de transmission autorisée puis détermine les caractéristiques du canal dans chacune de ces bandes de transmission. Il délivre la puissance de signal $H^2(f_i)$ [bloc 150] et la puissancee de bruit $\sigma^2(f_i)$ [bloc 250] du canal. On déduit ensuite [blocs 160, 260] une estimation de la puissance moyenne de signal conformément à l'équation (5) et une estimation de la puissance moyenne de bruit conformément à l'équation 6.

On complète ces calculs en faisant intervenir [blocs 170, 270] le bruit $\sigma_r^2$ propre aux moyens de réception tels que des moyens d'égalisation, des moyens de démodulation ou autres moyens. A partir des équations 7 et 8, le procédé détermine ainsi, pour la bande B testée, une estimation du rapport signal/bruit en sortie des moyens de réception de la station appelée tel que:

$$SNR_B \;=\; \frac{\displaystyle\sum_{f \in B} P_S(f_i)}{\displaystyle\sum_{f \in B} P_N(f_i)}$$

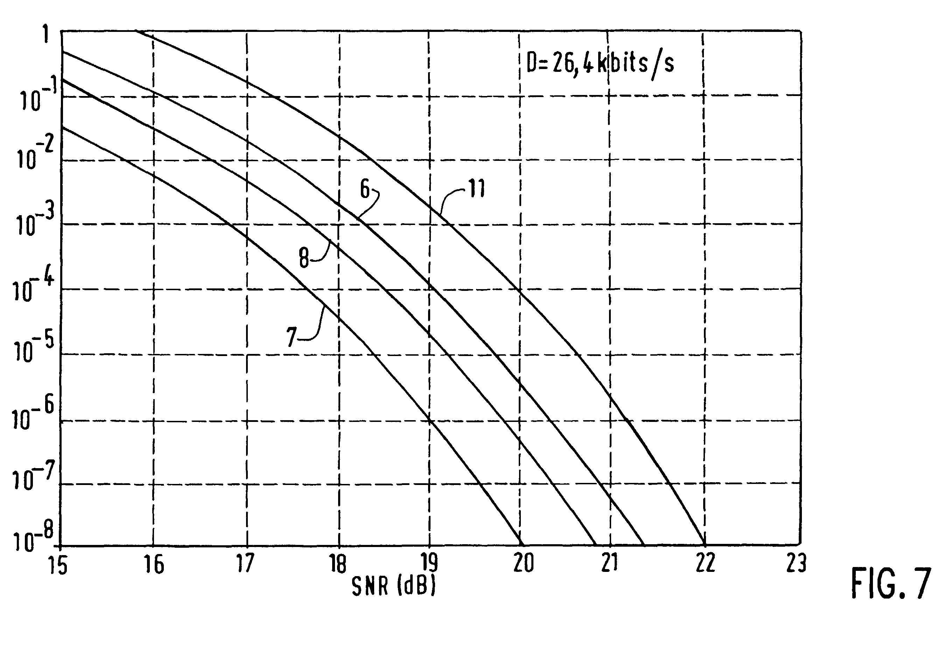

Cette estimation $SNR_B$ est comparée [bloc 190] à des valeurs théoriques $SNR_{th(B)}$ connues, préalablement déterminées, relatives à ces mêmes bandes B pour différents débits D. De telles valeurs peuvent être déduites par exemple des courbes représentées sur la figure 7. En effet, on peut calculer les performances maximales qu'il est possible d'atteindre dans le cas d'un canal et d'une station appelée tous deux parfaits. Ces performances dépendent, entre autres choses, du débit binaire D que l'on veut transmettre sur le canal et de la bande de fréquences utilisée B. Sur la figure 7, on a représenté la probabilité d'erreurs ERR en fonction du rapport signal/bruit pour différentes bandes de fréquences dans le cas d'un débit binaire de 26,4 kbits/s. Sur cette figure les courbes 6, 7, 8 et 11 correspondent aux bandes de fréquences 6, 7, 8 et 11 de la figure 1. Des courbes analogues existent pour les autres bandes et pour d'autres débits.

Ainsi dans une bande donnée, on peut fixer une valeur maximale pour la probabilité d'erreurs, ce qui d'après la figure 7 entraine une valeur théorique $SNR_{th(B)}$ du rapport signal/bruit. Cette valeur $SNR_{th(B)}$ est comparée dans le bloc 190 (figure 6) avec la valeur mesurée au moment du test. Lorsque la valeur mesurée $SNR_B$ est supérieure à $SNR_{th(B)}$, une autre bande est sélectionnée (connexion 200) dans le bloc 140 pour effectuer le même test. Toutes les bandes pour tous les débits envisageables sont ainsi testées en commençant par les débits les plus élevés. Lorsque la valeur mesurée $SNR_B$ est inférieure à $SNR_{th(B)}$, le système transmet (connexion 220) à la station appelée la/les bandes B apte(s) à la transmission et le/les débit(s) D [bloc 195] qui elle-même transmet l'information à la station appelante pour établir la communication.

L'estimation du bruit, généré par les moyens de réception eux-mêmes, est opérée au cours d'une étape préliminaire. Pour cela on utilise un canal ayant des performances connues et on mesure le rapport signal à bruit obtenu en sortie des moyens de réception. En utilisant les équations 7 et 8 on obtient une estimation de la valeur $\sigma_r^2$ qui constitue une caractéristique des moyens de réception. Elle reste ensuite constante dans l'exploitation du système.

La figure 4 représente un schéma bloc de l'ensemble du système de transmission. Il comprend, communiquant par un canal 105, une station appelante 100 et des moyens de réception 14 comportant une station appelée 110 et des moyens de test 16. La station appelante émet la séquence $L_1$ qui devient la séquence $S(f_i)$ à l'entrée de la station appelée. La séquence $S(f_i)$ est introduite dans des moyens de test 16 pour la mesure de la qualité du canal. Les moyens de test comprennent un échantillonneur 15 suivi d'un dispositif de traitement numérique du signal DSP 17. L'échantillonneur 15 effectue l'étape 120 de la figure 6 et le dispositif 17 réalise les autres étapes de la figure 6. Lorsque les bandes et les débits sont sélectionnés, le dispositif 17 émet ces informations (connexion 220) vers la station appelée qui les transmet à son tour vers la station appelante pour établir la communication. Bien évidemment, une station appelante devient une station appelée dans le cas d'une communication inversée. C'est ce qui se produit au cours de la procédure de test V.34 choisie comme exemple.

Pour effectuer l'étape préliminaire destinée à estimer le bruit $\sigma_r^2$ généré dans la station appelée, on connecte celle-ci successivement à plusieurs canaux 105 ayant des caractéristiques connues pour lesquels on dispose de mesures connues de rapport signal à bruit. On mesure le rapport signal/bruit en sortie de la station apppelée (connexion 20) et par approximations successives, on détermine une valeur $\sigma_r^2$ du bruit qui soit compatible avec les différents rapports signal/bruit attendus.

**Revendications**

1.  Procédé pour tester un canal de transmission par émission, sur le canal, par des moyens d'émission, d'une séquence de test comportant une pluralité de fréquences de test et pour sélectionner, à la réception, au moins une bande de fréquences apte à la transmission, le procédé comprenant les étapes suivantes effectuées par des moyens de réception:

    -   échantillonner la séquence reçue,
    -   effectuer, pour différentes bandes de fréquences, pour différents débits binaires, au moins une transformée de Fourier pour calculer, sur la pluralité de fréquences, la fonction de transfert du canal et pour en déduire une puissance de signal dans la bande et une puissance de bruit de canal dans la bande,
    -   calculer un rapport entre la puissance de signal et une puissance de bruit incluant la puissance de bruit de canal et une variance, préalablement estimée, des bruits dus aux moyens de réception,
    -   comparer, pour chaque bande, le rapport avec un rapport maximal théorique propre à chaque bande,
    -   sélectionner les bandes et les débits pour lesquels les rapports sont inférieurs aux rapports maximaux théoriques respectifs,
    -   transmettre la sélection aux moyens d'émission.

2.  Procédé selon la revendication 1 comprenant une étape préliminaire pour estimer la variance des bruits dus aux moyens de réception, étape effectuée en comparant le rapport signal/bruit en sortie des moyens de réception avec le rapport signal/bruit mesuré en sortie de canal pour au moins un canal de caractéristiques connues.

3.  Système de communication comprenant des moyens d'émission et des moyens de réception communiquant à travers un canal de transmission, les moyens d'émission émettant, sur le canal, une séquence de test comportant une pluralité de fréquences de test, les moyens de réception comportant des moyens de test comprenant des moyens pour calculer, pour différents débits binaires, sur la pluralité de fréquences, une puissance de bruit de canal dans des bandes de fréquences pour tester une qualité du canal en calculant une fonction de transfert du canal et pour sélectionner au moins une bande de fréquences pour la transmission **caractérisé en ce que** les moyens de test comprennent:

    -   des moyens pour calculer, pour chaque bande, un rapport entre une puissance du signal de la séquence et une puissance de bruit incluant la puissance de bruit de canal et une variance, préalablement estimée, des bruits dus aux moyens de réception,
    -   des moyens pour comparer, pour chaque bande, le rapport avec un rapport maximal théorique propre à chaque bande,
    -   des moyens pour sélectionner les bandes et les débits pour lesquels le rapport est inférieur aux rapports maximaux théoriques respectifs et pour transmettre la sélection aux moyens d'émission.

4.  Système selon la revendication 3 **caractérisé en ce que** les moyens de test comportent un dispositif calculateur pour réaliser les calculs, les comparaisons et les sélections de bandes et de débits.

**Patentansprüche**

1.  Verfahren zum Testen eines Übertragungskanals, indem über den Kanal mittels Sendeverfahren eine Testsequenz mit einer Vielzahl von Testfrequenzen gesendet wird, und zur Auswahl beim Empfang mindestens einer für die Übertragung geeigneten Frequenzbands, wobei das Verfahren folgende Stufen umfaßt, die von den Empfangsverfahren durchgeführt werden:

    -   Abtasten der empfangenen Frequenz,
    -   Durchführen für verschiedene Frequenzbereiche und verschiedene Bitraten mindestens einer Fourier-Transformierten, um für die Vielzahl von Frequenzen die Übertragungsfunktion des Kanals zu berechnen und um davon eine Signalleistung im Band und eine Kanalrauschleistung im Band abzuleiten,
    -   Berechnen eines Verhältnisses zwischen der Signalleistung und einer Rauschleistung einschließlich der Kanalrauschleistung und einer Varianz, im voraus bestimmt, des durch die Empfangsverfahren bedingten Rauschens,
    -   Vergleichen für jedes Band des Verhältnisses mit einem theoretischen maximalen, jedem Band eigenen Verhältnis,

- Auswählen der Bandbereiche und der Bitraten, für die die Verhältnisse unter den jeweiligen theoretischen maximalen Verhältnissen liegen,
- Übertragen der Auswahl mit den Sendeverfahren.

**2.** Verfahren nach Anspruch 1 mit einer Vorstufe, um die den Empfangsverfahren zugrundeliegende Rauschvarianz zu bewerten, beim Vergleichen des Signal/Rausch-Verhältnisses am Ausgang der Empfangsverfahren mit dem am Kanalausgang mindestens eines Kanals mit bekannten Merkmalen gemessen Signal/Rausch-Verhältnis. Dennoch ist es möglich, die den Empfangsverfahren zugrundeliegende Rauschvarianz mit anderen Verfahren zu bewerten.

**3.** Kommunikationssystem mit Sendeverfahren und Empfangsverfahren, die mit einem Übertragungskanal verbunden sind, wobei die Sendeverfahren über den Kanal eine Testsequenz ausstrahlen, die zahlreiche Testfrequenzen umfasst, die Empfangsverfahren Testverfahren aufweisen, mit Rechenverfahren für verschiedene Bitraten über die Vielzahl Frequenzen und eine Kanal-Rauschleistung in den Frequenzbereichen, um unter Berechnung einer Übertragungsfunktion des Kanals und zur Auswahl mindestens eines Frequenzbandes für eine Übertragung die Kanalqualität zu testen, **dadurch gekennzeichnet, dass** diese Verfahren aufweisen:

- Verfahren zum Berechnen, für jedes Frequenzband, eines Verhältnisses zwischen einer Signalleistung der Sequenz und einer Rauschleistung einschließlich der Kanalrauschleistung und einer Varianz, im voraus bestimmt, des durch die Empfangsverfahren bedingten Rauschens,
- Verfahren zum Vergleichen, für jedes Band, des Verhältnisses mit einem theoretischen maximalen, jedem Band eigenen Verhältnis,
- Verfahren zum Auswählen der Bandbereiche und der Bitraten, für die die Verhältnisse unter den jeweiligen theoretischen maximalen Verhältnissen liegen, und um die Auswahl den Übertragungsverfahren zu übertragen.

**4.** System nach Anspruch 3, **dadurch gekennzeichnet, dass** die Testverfahren eine Rechenvorrichtung enthalten, um die Berechnungen, die Vergleiche und Auswahl der Bandbereiche und Bitraten durchzuführen.

## Claims

**1.** A method for testing a transmission channel by transmitting by the channel *via* transmitting means a test sequence comprising a plurality of test frequencies and for selecting on the receiving side at least one frequency band suitable for the transmission, the method including the following steps carried out by receiving means:

- sampling of the received sequence,
- performing, for various frequency bands and for various bit rates, at least one Fourier transform to calculate for the plurality of frequencies the channel transfer function and to derive therefrom a signal power within the band and a channel noise power within the band,
- calculating a ratio between the signal power and a noise power which includes the channel noise power and a variance, estimated beforehand, of the noise caused by receiving means.
- comparing for each band the ratio with a theoretical maximum ratio belonging to each band,
- selecting the bands and the rates for which the ratios are smaller than the respective theoretical maximum ratios,
- transmitting the selection to the transmitting means.

**2.** A method as claimed in Claim 1, comprising a preliminary step for estimating the variance of the noise caused by receiving means, which step is carried out by comparing the signal-to-noise ratio on the output of the receiving means with the signal-to-noise ratio measured on the output of the channel for at least one channel that has known characteristic features.

**3.** A communication system comprising transmitting means and receiving means which communicate by a transmission channel, the transmitting means transmitting a test sequence comprising a plurality of test frequencies by the channel, and the receiving means comprising test means which comprise calculation means for calculating for various bit rates over a plurality of frequencies a channel noise power in frequency bands to test a quality of the channel by calculating a transfer function of the channel and to select at least a frequency band for the transmission, **characterized in that** the test means comprise:

- calculation means for calculating for each band a ratio between a power of the signal of the sequence and a noise power including the channel noise power and a variance estimated beforehand of the noise caused by the receiving means,
- comparing means for comparing for each band the ratio with a theoretical maximum ratio that belongs to each band,
- selecting means for selecting the bands and the bit rates for which the ratios are smaller than the respective theoretical maximum ratios and for transmitting the selection to the transmitting means.

4. A system as claimed in Claim 3, **characterized in that** the test means comprise a calculator for performing the calculations, comparisons and selections of frequency bands and bit rates.

FIG.1

EP 0 731 573 B1

FIG. 2

FIG. 3

FIG. 4

FIG. 5

FIG. 6

FIG. 7

EP 0 731 573 B1